(19) Europäisches Patentamt
European Patent Office
Office européen des brevets

(11) EP 0 468 326 B2

(12) # NEUE EUROPÄISCHE PATENTSCHRIFT

(45) Veröffentlichungstag und Bekanntmachung des Hinweises auf die Entscheidung über den Einspruch:
**02.12.1998 Patentblatt 1998/49**

(45) Hinweis auf die Patenterteilung:
**24.05.1995 Patentblatt 1995/21**

(21) Anmeldenummer: **91111723.2**

(22) Anmeldetag: **13.07.1991**

(51) Int Cl.6: **C09K 19/42**, C09K 19/34

(54) **Ferroelektrische Flüssigkristallanzeige**

Ferroelectric liquid crystal display

Affichage à cristaux liquides ferro-électrique

(84) Benannte Vertragsstaaten:
**DE GB**

(30) Priorität: **27.07.1990 DE 4023867**

(43) Veröffentlichungstag der Anmeldung:
**29.01.1992 Patentblatt 1992/05**

(73) Patentinhaber: **HOECHST AKTIENGESELLSCHAFT**
**65926 Frankfurt am Main (DE)**

(72) Erfinder:
- **Geelhaar, Thomas, Dr.**
  **W-6500 Mainz (DE)**
- **Pausch, Axel**
  **W-6104 Seeheim (DE)**
- **Kompter, Michael, Dr.**
  **W-6086 Riedstadt-Erfelden (DE)**
- **Scheuble, Bernhard, Dr.**
  **W-6104 Seeheim-Jugenheim (DE)**

(74) Vertreter: **Isenbruck, Günter, Dr. et al**
**Patent- und Rechtsanwälte**
**Bardehle-Pagenberg-Dost-Altenburg-Geissler-Isenbruck**
**Theodor-Heuss-Anlage 12**
**68165 Mannheim (DE)**

(56) Entgegenhaltungen:
**EP-A- 0 206 228**
**EP-A- 0 332 025**
**EP-A- 0 399 298**
**WO-A-87/01717**

- **PROCEEDINGS OF THE SID, Bd. 28, Nr. 2, Seiten 201-204; S. SHIMODA ET AL.:"An optimum bias condition for multiplex driving of the chiral smectic-C LCD"**
- **DISPLAYS, Bd. 11, Nr. 1, Seiten 41-45, GUILDFORD, GB; F. LEENHOUTS ET AL.: "Novel ferroelectric smectic C liquid crystal mixtures for display applications"**

EP 0 468 326 B2

## Beschreibung

Die Erfindung betrifft eine ferroelektrische Flüssigkristallanzeige mit verbesserter Multiplexierbarkeit, welche zwischen zwei planparallelen Platten, versehen mit einer Elektrodenmatrix aus Abtast- und senkrecht dazu angeordneten Datenelektroden ein ferroelektrisches Flüssigkristallmedium aufweist, wobei dieses Medium eine chirale Komponente, bestehend aus einem oder mehreren chiralen Dotierstoffen und eine achirale Basiskomponente, bestehend aus einer oder mehreren achiralen Verbindungen, enthält.

Ferroelektrische Flüssigkristallanzeigen enthalten in der Regel Flüssigkristallmedien mit chiralen getilteten smektisch-C-Phasen ($S_C$*), die durch Dotierung einer Sc-Basis-mischung mit einem chiralen Dotierstoff erhalten werden können (W. Kuczynski, H. Stegemeyer, Chem. Phys. Lett. 70 (1983), 123). Diese Anzeigen beruhen auf dem von Clark und Lagerwall beschriebenen Prinzip der SSFLC-Technologie (N.A. Clark und S.T. Lagerwall, Appl. Phys. Lett. 36 (1980), 899; US 4,367,924).

Die Anforderungen an in derartigen elektrooptischen Anzeigen verwendeten $S_C$*-Phasen sind noch:

(i) die $S_C$*-Phase soll in einem möglichst weiten Temperaturbereich um die Umgebungstemperatur existieren.
(ii) die die $S_C$*-Phase bildenden Flüssigkristallverbindungen sollen chemisch stabil und rein sein.
(iii) die Materialparameter des Flüssigkristalls, wie z.B. spontane Polarisation P, optische Anisotropie $\Delta n$, Fließviskosität $\eta$, dielektrische Anisotropie $\Delta\varepsilon$, Tiltwinkel $\Theta$ und Pitch p sollten optimiert sein.

Bei nematischen (N) Phasen oder $S_A$-Phasen kann der Phasenbereich im allgemeinen dadurch erweitert werden, daß eine Mischung verschiedener N- oder $S_A$-Komponenten hergestellt wird, wobei sich häufig eine mittlere Phasenübergangstemperatur $T_{N-I}$ bzw.

$$T_{S_A\text{-}I},$$

jedoch eine gegenüber dem mittleren Schmelzpunkt erniedrigte Schmelztemperatur einstellt. Dieses Verfahren ist nicht ohne weiteres auf $S_C$-Phasenübertragbar, da bei der Mischung von $S_C$-Phasen manchmal eine $S_B$-Phase induziert wird oder die $S_C$-Phase durch eine dominierende SA-Phase auf einen engen Temperaturbereich eingeschränkt wird. Zudem ist die Palette von Substanzen, die eine $S_C$-Phase mit großem Phasenbereich aufweisen und sich durch eine hohe chemische Stabilität und Reinheit auszeichnen, wesentlich kleiner als der Pool nematischer Verbindungen, so daß die Mischungsmöglichkeiten erheblich eingeengt sind.

Somit ist die Forderung, $S_C$-Phasen bereitzustellen, die die Anforderungen (i) und (ii) erfüllen, nicht trivial und das Problem, die Anforderungen (i)-(iii) gleichzeitig zu erfüllen, kann als weitgehend ungelöst betrachtet werden.

Es besteht somit immer noch ein erheblicher Bedarf an Mischungskonzepten. die eine möglichst breite Palette von nicht notwendigerweise eine $S_C$-Phase aufweisenden flüssigkristallinen Komponenten für die Bereitstellung von flüssigkristallinen Medien mit einer $S_C$-Phase erschließen und somit den Spielraum für eine gleichzeitige Erfüllung der Anforderungen (i)-(iii) erheblich erweitern.

Für die bisher bekannten ferroelektrischen Flüssigkristallanzeigen wurden Flüssigkristallmedien eingesetzt, die eine Spontanpolarisation in der Regel von mehr als 10 nC/cm$^2$ aufweisen, da die Schaltzeit entsprechend der Gleichung

$$\tau \propto \frac{\gamma}{P \cdot E}$$

($\gamma$ = Viskosität, P = Spontanpolarisation, E = Elektrisches Feld) mit steigender Spontanpolarisation erniedrigt wird.

In der JP-A 62/240378 ist eine ferroelektrische Flüssigkristallmischung mit einer Spontanpolarisation von 3 - 100 und einer dielektrischen Anisotropie von -1 - -6 beschrieben. In den Ausführungsbeispielen bewegen sich die Werte für die Spontanpolarisation zwischen 25 und 48 nC/cm$^2$, die der dielektrischen Anisotropie zwischen -1,3 und -3,6.

Der Erfindung lag die Aufgabe zugrunde, neue ferroelektrische Flüssigkristallanzeigen mit verbesserter Multiplexierbarkeit bereitzustellen. Überraschenderweise wurde nun gefunden, daß diese Aufgabe durch die Bereitstellung des erfindungsgemäßen Verfahrens und der erfindungsgemäßen Flüssigkristallanzeigen gelöst werden kann.

Gegenstand der Erfindung ist daher ein Verfahren zur Verbesserung der Multiplexierbarkeit ferroelektrischer Flüssigkristallanzeigen, welche zwischen zwei planparallelen Platten, versehen mit einer Elektrodenmatrix aus Abtast- und senkrecht dazu angeordneten Datenelektroden ein ferroelektrisches Flüssigkristallmedium aufweisen, wobei dieses Medium eine chirale Komponente, bestehend aus einem oder mehreren Dotierstoffen, und eine achirale Basiskomponente, bestehend aus einem oder mehreren achiralen Verbindungen, enthält, dadurch gekennzeichnet, daß man ein Medium verwendet, welches eine dielektrische Anisotropie von -0,01 bis -1,2 und eine Spontanpolarisation von kleiner als 8 nC/cm$^2$ aufweist, wobei sich die Angabe der dielektrischen Anisotropie und der Spontanpolarisation auf

Raumtemperatur bezieht, mit der Maßgabe, daß Medien mit einer Spontanpolarisation von 3 $nC/cm^2$ und einer dielektrischen Anisotropie von -1 ausgenommen sind.

Gegenstand der Erfindung ist ebenso eine ferroelektrische Flüssigkristallanzeige mit verbesserter Multiplexierbarkeit, welche zwischen zwei planparallelen Platten, versehen mit einer Elektrodenmatrix aus Abtast- und senkrecht dazu angeordneten Datenelektroden ein ferroelektrisches Flüssigkristallmedium aufweist, wobei dieses Medium eine chirale Komponente, bestehend aus einem oder mehreren chiralen Dotierstoffen und eine achirale Basiskomponente, bestehend aus einer oder mehreren achiralen Verbindungen, enthält, wobei dieses Medium eine dielektrische Anisotropie von -0,01 bis -1,2 und eine Spontanpolarisation von kleiner als 8 $nC/cm^2$ aufweist, insbesondere eine solche Flüssigkristallanzeige, wobei die achirale Basiskomponente mindestens eine Verbindung mit dem Strukturelement 2-Fluor-1,4-phenylen, 2,3-Difluor-1,4-phenylen, Thia-3,4-diazol-2,5-diyl oder 1-Cyan-1,4-cyclohexylen enthält.

Weiterhin bevorzugt sind solche Flüssigkristallanzeigen, wobei die achirale Basiskomponente im wesentlichen aus Verbindungen der folgenden Komponenten I und II besteht:

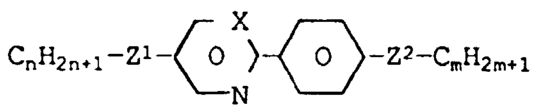

I

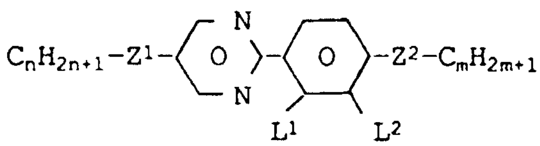

II

worin

| | |
|---|---|
| n und m | jeweils unabhängig voneinander 5 bis 12, |
| x | N oder CH, |
| $L^1$ und $L^2$ | H oder F, wobei mindestens ein Ligand $L^1$ bzw. $L^2$ von H verschieden ist, und |
| $Z^1$ und $Z^2$ | -O- oder eine Einfachbindung |

bedeutet, insbesondere wobei die Komponente I aus Verbindungen einer oder mehreren der Formeln Ia, Ib, Ic und Id besteht:

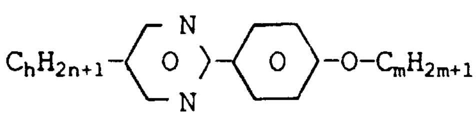

Ia

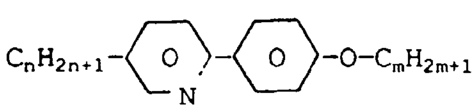

Ib

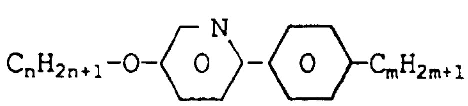

Ic

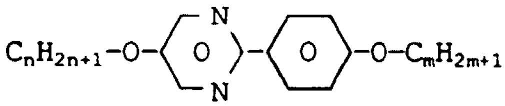

Id,

und/oder die Komponenten II aus Verbindungen einer oder mehreren der Formeln IIa bis IIi besteht:

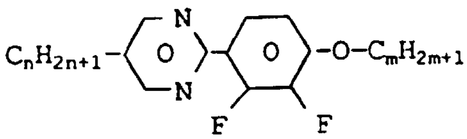

IIa

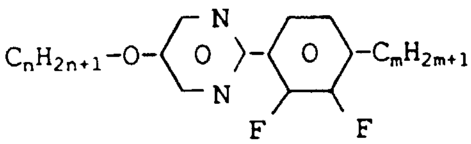

IIb

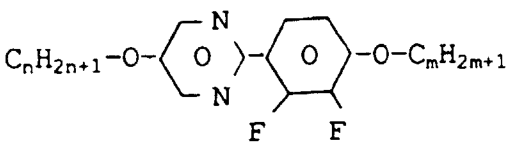

IIc

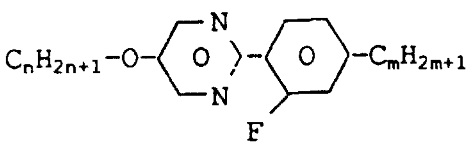

IId

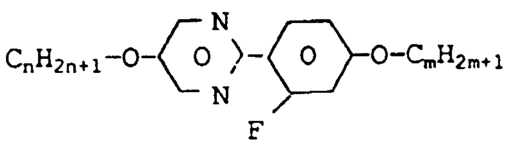

IIe

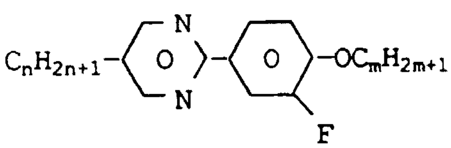

IIf

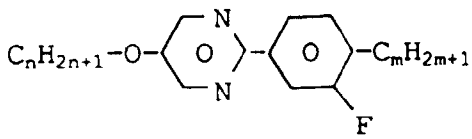

IIg

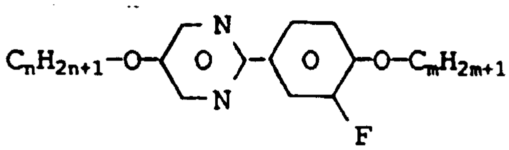

IIh

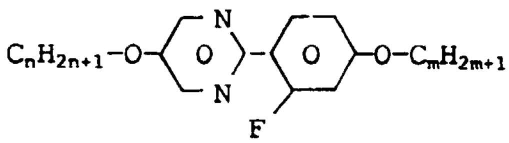

IIi

Ferner bevorzugt sind solche Anzeigen, wobei die achirale Basiskomponente die Komponenten I bis II in folgenden Gewichtsanteilen enthält:

| | |
|---|---|
| I | ≧ 35 % |
| II | 8-50 % |

Desweiteren bevorzugt sind solche Anzeigen, wobei der Gewichtsanteil der chiralen Komponente 1 bis 25 % beträgt, insbesondere wobei die chirale Komponente aus einer oder mehreren Verbindungen der Formel III besteht:

$$C_nH_{2n+1}\text{-Q-A-B-}Q^1\text{-}C^*\text{-}R^oY\text{-}Q^2\text{-}C_mH_{2m+1} \qquad \text{III}$$

worin n und m jeweils unabhängig voneinander 2 bis 12, Q -O- oder eine Einfachbindung, -A-B-

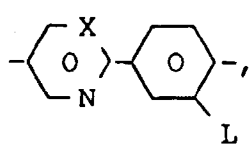

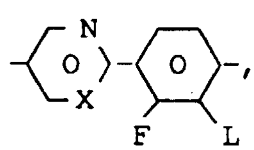

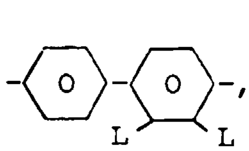

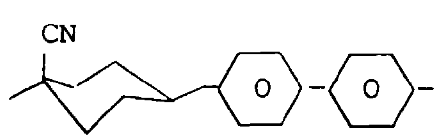

oder ein Spiegelbild dieser Gruppen, wobei L jeweils unabhängig voneinander H oder F bedeutet,

X CH oder N,

$Q^1$ und $Q^2$ jeweils unabhängig voneinander -COO-, -O- oder Alkylen mit 2 bis 4 C-Atomen, worin auch eine $CH_2$-Gruppe durch -O-, -S-, -CO-, -O-CO-, -CO-O-, -S-CO-, -CO-S-, -CH=CH-COO-, -CH =CH-, -CHHalogen- und/oder -CHCN- ersetzt sein kann, oder eine Einfachbindung, wobei $Q^1$ vorzugsweise -O-, $-CH_2CH_2-$ oder $-OCH_2-$ und $Q^2$ -COO- oder eine Einfachbindung bedeuten,

Y Halogen, CN, $CH_3$, $CH_2CN$ oder $OCH_3$, vorzugsweise F oder $CH_3$,

R° H oder eine von Y und $-Q^2-C_mH_{2m+1}$ verschiedene Alkylgruppe mit 1 bis 10 C-Atomen, vorzugsweise H, und

C* ein mit vier verschiedenen Substituenten verknüpftes Kohlenstoffatom bedeuten.

Die Flüssigkristallmischung weist bevorzugt eine Spontanpolarisation $P_s$ auf, die größer als 1 $nC/cm^2$ ist.

Weiter enthält die Flüssigkristallmischung bevorzugt mindestens einen chiralen Dotierstoff. Dabei weist der chirale Dotierstoff bevorzugt eine Spontanpolarisation > 5 $nC/cm^2$ auf. Die Flüssigkristallmischung weist bevorzugt eine schwach negative Anisotropie der Dielektrizitätskonstante ($\Delta\varepsilon$) auf. Diese ist vorzugsweise zwischen -0,01 und -1,1, insbesondere zwischen -0,1 und -1.

Die Angabe der physikalischen Parameter $\Delta\varepsilon$ und P bezieht sich auf Raumtemperatur. Bei höheren oder niedrigeren Temperaturen verändern sich diese Parameter entsprechend ihrer Temperaturabhängigkeit.

Smektische Phasen werden nach den im Polarisationsmikroskop sichtbaren Texturen klassifiziert und als smektische Phasen vom Typ A, B, C ... bezeichnet. Alle smektischen Phasentypen weisen eine Parallelstellung und Anordnung der Moleküle in Schichten auf, wobei jedoch die Art der molekularen Ordnung verschieden ist.

Man kann zwischen orthogonalen und getilteten smektischen Phasen unterscheiden. Bei orthogonalen Strukturen sind die langen Molekülachsen im Mittel senkrecht zur Schichtebene angeordnet, während in getilteten Phasen die Moleküle im Mittel um den Tiltwinkel gegen die Flächennormale geneigt sind. Chirale getiltete Phasen sind ferroelektrisch, so daß ihnen für SSFLC-Displays eine besondere Bedeutung zukommt.

Bei den beiden orthogonalen $S_A$- und $S_B$-Phasen entspricht der Schichtabstand etwa der Länge der flüssigkristallinen Moleküle. In der $S_A$-Phase haben die Moleküle innerhalb der Schichten eine beträchtliche Freiheit der Translation und der Rotation um die Längsachse der Moleküle. Die Molekülschichten sind wegen dieser relativ lockeren molekularen Organisation ziemlich flexibel. Demgegenüber zählt die orthogonale $S_B$-Phase, bei der die Moleküle in den Schichten hexagonal dicht gepackt sind, zu den höher geordneten smektischen Phasen.

Bei den getilteten smektischen Phasen ist der Schichtabstand im Mittel kleiner als die Länge der flüssigkristallinen Moleküle. Zu den getilteten smektischen Phasen zählen z.B. die $S_C$-Phase, die einen relativ geringen Ordnungsgrad der Moleküle innerhalb der Schichten aufweist, die höher geordneten flüssigkristallinen smektischen Phasen $S_I$ und $S_F$ und die kristallinen smektischen Phasen $S_G$, $S_H$, $S_K$ und $S_J$.

Höher geordnete smektische Phasen sind ganz allgemein dadurch gekennzeichnet, daß sie neben der Anordnung der Moleküle in Schichten noch eine Korrelation der Molekülschwerpunkte aufweisen.

Chirale getiltete smektische Phasen sind ferroelektrisch und können daher als flüssigkristalline Medien in SSFLC-Displays verwendet werden. Von den flüssigkristallinen getilteten chiralen smektischen Phasen ist die $S_C$*-Phase besonders geeignet und daher auch in bisher hergestellten Displays ganz überwiegend verwendet worden.

Verbindungen mit dem Strukturelement 2,3-Difluor-1,4-phenylen weisen vorzugsweise eine $S_C$-Phase auf; es können aber auch derartige Verbindungen ohne $S_C$-Phase verwendet werden.

Die Herstellung von Verbindungen mit diesem Strukturelement ist z.B. in DE 38 07 801, DE 38 07 823, DE 38 07 803, DE 38 07 870, DE 38 07 819, DE 38 07 861, DE 38 07 871, DE 38 07 802 und DE 38 07 862 beschrieben. Dabei kann man auch von an sich bekannten, hier nicht näher erwähnten Varianten Gebrauch machen. Die Ausgangsstoffe können gewünschtenfalls auch in situ gebildet werden, derart, daß man sie aus dem Reaktionsgemisch nicht isoliert, sondern sofort weiter zu den Zielverbindungen umsetzt.

Die Verbindung der achiralen Basiskomponenten mit dem Strukturelement 2-Fluor-phenylen oder 2,3-Difluor-1,4-phenylen ist vorzugsweise eine Verbindung der Formel A

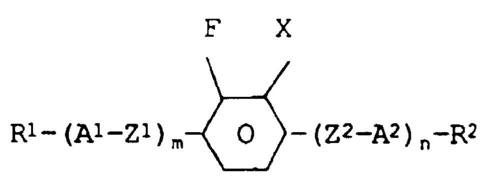

A

worin

$R^1$ und $R^2$ jeweils unabhängig voneinander unsubstituiertes, einfach durch Cyan oder mindestens einfach durch

Fluor oder Chlor substituiertes Alkyl mit 1 bis 15 C-Atomen oder Alkenyl mit 3 bis 15 C-Atomen, wobei in diesen Resten jeweils auch eine $CH_2$-Gruppe durch -O-, -S-, -CO-, -O-CO-, -CO-O- oder -O-CO-O- ersetzt sein kann, einer der Reste $R^1$ und $R^2$ auch einen Chiralität induzierten organischen Rest Q* mit einem asymmetrischem Kohlenstoffatom,

$A^1$ und $A^2$ jeweils unabhängig voneinander unsubstituiertes oder durch ein oder zwei F-und/oder Cl-Atome und/oder $CH_3$-Gruppen und/oder CN-Gruppen substituiertes 1,4-Phenylen, worin auch eine oder zwei CH-Gruppen durch N ersetzt sein können, 1,4-Cyclohexylen, worin auch eine oder zwei nicht benachbarte $CH_2$-Gruppen durch O-Atome und/oder S-Atome ersetzt sein können, Piperidin-1,4-diyl, 1,4-Bicyclo(2,2,2)octylen, 1,3,4-Thiadiazol-2,5-diyl, Naphthalin-2,6-diyl oder 1,2,3,4-Tetrahydronaphthalin-2,6-diyl,

$Z^1$ und $Z^2$ jeweils unabhängig voneinander -CO-O-, -O-CO-, $-CH_2CH_2-$, $-OCH_2-$, $-CH_2O-$, -C≡C- oder eine Einfachbindung,

X H oder F,

m und n jeweils 0, 1 oder 2, und

(m + n) 1 oder 2 bedeutet.

Die Verbindungen der Formel A umfassen 2- und 3-kernige 2-Fluor- und 2,3-Difluor-1,4-phenylenderivate. Von den 2-kernigen, welche bevorzugt sind, sind diejenigen bevorzugt, worin $R^1$ n-Alkyl oder n-Alkoxy mit 5-12, insbesondere mit 7-10 C-Atomen bedeutet.

Weiter bevorzugt sind 3-kernige Verbindungen der Formel A mit m = n = 1 oder m = 0 und n = 2.

Bevorzugte Verbindungen der Formel A sind weiter in DE 38 07 801, DE 38 07 823, DE 38 07 803, DE 38 07 870, DE 38 07 819, DE 38 07 861, DE 38 07 871, DE 38 07 802 beschrieben.

$R^1$ und $R^2$ sind jeweils unabhängig voneinander vorzugsweise Alkyl, Alkoxy, Alkanoyl, Alkanoyloxy, Alkoxycarbonyl oder Alkoxycarbonyloxy mit jeweils vorzugsweise 5 bis 12, insbesondere 6 bis 10 C-Atomen. Besonders bevorzugt sind Alkyl und Alkoxy. Vorzugsweise ist eine der Gruppen $R^1$ und $R^2$ Alkyl. Eine besonders bevorzugte Kombination ist $R^1$ = Alkyl und $R^2$ = Alkoxy und ferner $R^1$ = Alkoxy und $R^2$ = Alkyl. Besonders bevorzugt sind $R^1$ und $R^2$-Gruppen mit geradkettigem Alkylrest.

Weiterhin bevorzugt sind Verbindungen der Formel A, worin $R^1$ n-Alkyl mit 5-13 C-Atomen bedeutet und $R^2$ n-Alkyl, n-Alkoxy, n-Alkanoyloxy, n-Alkoxycarbonyl oder n-Alkylthio mit 5-11 C-Atomen ist.

Weiter bevorzugt sind solche Verbindungen der Formel A als Bestandteil der chiralen Komponente, bei denen einer der Reste $R^1$ und $R^2$ einen chiralen Rest der Formel B

$$-Q^1-C^*R^\circ X-Q^2-R^2 \qquad B$$

bedeutet, worin

$Q^1$ und $Q^2$ jeweils unabhängig voneinander Alkylen mit 2 bis 4 C-Atomen, worin auch eine $CH_2$-Gruppe durch -O-, -S-, -CO-, -O-CO-, -CO-O-, -S-CO-, -CO-S-, -CH = CH-COO-, -CH = CH-, -CHHalogen- und/oder -CHCN- ersetzt sein kann, oder eine Einfachbindung,

X Halogen, CN, $CH_3$, $CH_2CN$ oder $OCH_3$,

R° H oder eine von X und $-Q^2-R^2$ verschiedene Alkylgruppe mit 1 bis 10 C-Atomen, und

C* ein mit vier verschiedenen Substituenten verknüpftes Kohlenstoffatom bedeutet.

Die Verwendung einer oder mehrerer Verbindungen der Formel I mit einem solchen Rest II führt zu einem erfindungsgemäßen Flüssigkristallmedium mit einer chiralen $S_C$*-Phase, die ferroelektrische Eigenschaften aufweist.

$Q^1$ in Formel B ist bevorzugt n-Alkyl, n-Alkoxy, n-Alkanoyloxy und n-Alkoxycarbonyl mit 2-4 C-Atomen. Weiter bevorzugt bedeutet $Q^1$

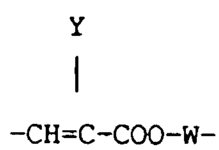

worin

Y F, Cl, CN oder H und
W $-CH_2-$ oder eine Einfachbindung bedeutet.
X in Formel B ist bevorzugt Halogen, CN, $OCH_3$, $CH_3$, insbesondere jedoch F, Cl, CN, $OCH_3$ und $CH_3$ und ganz besonders $CH_3$.
$R^o$ in Formel B ist bevorzugt H, n-Alkyl oder n-Alkoxy mit 1-3 C-Atomen, insbesondere jedoch H, $CH_3$ und $CH_3O$ und ganz besonders H.
$Q^2$-$R^2$ in Formel B ist bevorzugt n-Alkyl oder n-Alkoxy mit 1-5 C-Atomen, insbesondere jedoch n-Alkyl mit 1-3 C-Atomen.

Besonders bevorzugt sind ferroelektrische Flüssigkristallanzeigen, welche Flüssigkristallmedien aufweisen, worin die achirale Komponente 60 bis 100 Gew.%, insbesondere 65 bis 80 Gew.%, eine, zwei, drei oder mehrer Verbindungen der Formel I, insbesondere worin X N bedeutet enthält.

Weiterhin besonders bevorzugt enthält die achirale Komponente 0 bis 40 Gew.%, insbesondere 20 bis 35 Gew.% eine, zwei, drei oder mehr Verbindungen der Formel II, insbesondere worin $L^1$ und $L^2$ F bedeuten.

Falls die achirale Komponente keine Verbindung mit dem Strukturelement 2-Fluor-1,4-phenylen, 2,3-Difluor-1,4-phenylen oder 1-Cyan-1,4-cyclohexylen enthält, enthält die chirale Komponente mindestens eine Verbindung mit einem dieser Strukturelemente.

Da die Schaltzeit $\gamma$ von SSFLC-Displays umgekehrt proportional zur Spontanpolarisation P ist, sind erfindungsgemäße Flüssigkristallmischungen mit hoher Spontanpolarisation bevorzugt. P ist bevorzugt größer als 1 $nC/cm^2$, insbesondere jedoch größer als 5 $nC/cm^2$ und ganz besonders zwischen 6 und 8 $nC/cm^2$.

Die in den erfindungsgemäßen Flüssigkristallanzeigen verwendeten Flüssigkristallmedien müssen ferroelektrische Eigenschaften aufweisen. Dies kann dadurch erreicht werden, daß eine oder mehrere Komponenten des Flüssigkristallmediums ein chirales Zentrum aufweisen, und/oder daß dem $S_C$-Basismedium ein oder mehrere chirale Dotierstoffe zugesetzt werden. Die Dotierstoffe können mesogen oder auch nicht-mesogen sein, weisen dann aber bevorzugt eine Flüssigkristallmolekülen ähnliche Struktur auf. Die Verwendung chiraler Dotierstoffe mit hoher Spontanpolarisation P ist bevorzugt, da auf diese Weise die Spontanpolarisation praktisch unabhängig von anderen Eigenschaften des Mediums, wie z.B. dem Phasenbereich, der Viskosität usw. beeinflußt werden kann. Bevorzugt sind chirale Dotierstoffe, deren Spontanpolarisation P größer als 10 $nC/cm^2$ ist.

Dabei sind solche multiplexierbaren Flüssigkristallanzeigen bevorzugt, die auf dem Prinzip der SSFLC-Technologie beruhen. In diesen Systemen sind die smektischen Schichten senkrecht zu den Platten der Zelle angeordnet. Die helixartige Anordnung der Tiltrichtungen der Moleküle wird durch einen sehr geringen Abstand der Platten (ca. 1-2 µm) unterdrückt. Dadurch werden die Längsachsen der Moleküle gezwungen, sich in einer Ebene parallel zu den Platten der Zelle anzuordnen, wodurch zwei ausgezeichnete Tiltorientierungen entstehen. Durch Anlegen eines geeigneten elektrischen Wechselfeldes kann in der eine spontane Polarisation aufweisenden flüssigkristallinen Phase zwischen diesen beiden Zuständen hin- und hergeschaltet werden. Dieser Schaltvorgang ist wesentlich schneller als bei herkömmlichen verdrillten Zellen (TN-LCD's), die auf nematischen Flüssigkristallen basieren.

Solche multiplexierbaren ferroelektrischen Flüssigkristallanzeigen sind z.B. beschrieben von S. Shimoda et al. in Proceedings of SID, Vol. 28/2, 1987, 201-204 und in EP-0 366 117, EP-0 367 531, EP-0 370 649 und EP-0 374 865.

Weiter bevorzugt sind die erfindungsgemäßen Flüssigkristallanzeigen, bei denen eine flüssigkristalline Polymerzusammensetzung benutzt wird, die aus einem ferroelektrischen flüssigkristallinen Polymer und einem niedermolekularen flüssigkristallinen Medium mit einer $S_C$- oder $S_C$*-Phase besteht. Ähnliche elektrooptische Systeme sind z.B. in EP 0,297,554 beschrieben.

Die Herstellung der erfindungsgemäßen Anzeigen erfolgt in an sich üblicher Weise. In der Regel werden die Komponenten ineinander gelöst, zweckmäßig bei erhöhter Temperatur und das Flüssigkristallmedium in die Anzeige in an sich bekannter Weise, z.B. nach K. Iwasa JEE, September 1986, 33-37, gefüllt.

Die folgenden Beispiele sollen die Erfindung erläutern, ohne sie zu begrenzen. Vor- und nachstehend bedeuten Prozentangaben Gewichtsprozent; alle Temperaturen sind in Grad Celsius angegeben.

Die in den folgenden Beispielen verwendeten ferroelektrischen Flüssigkristallanzeigen weisen folgende Ansteuerschemata auf (vgl. Fig. 1):

- idealisierter "Bipolarer Puls" -A-
- Matrixansteuerschema nach S. Shimoda et al., Proceedings of SID, Vol. 28/2, 1987 -B- und -C-
- AC-Feld stabilisiertes Matrixansteuerschema nach T. Umeda et al., Japanese Journal of Applied Physics 27 (7), 1988, 1115-1121 -D- und -E-

Fig. 1 zeigt die Verhältnisse der jeweiligen Signalfrequenz $f_S$ zur Frequenz des AC-Feldes $f_{AC}$ und das Verhältnis der Signalspannung $V_S$ zur AC-Stabilisierungsspannung $V_{AC}$.

Fig. 2 zeigt das Contrast Ratio (= Kontrast-Verhältnis eines angesteuerten zu einem nicht-angesteuerten Bildpunkt)

in Abhängigkeit der Pulse Width (Pulsweite in µs) des flüssigkristallinen Mediums aus Beispiel 1 bei verschiedenen Ansteuerschemata A-E.

Fig. 3 zeigt das Contrast Ratio in Abhängigkeit der Pulse Width des flüssigkristallinen Mediums aus Beispiel 2 bei verschiedenen Ansteuerschemata A-E.

Fig. 4 zeigt das Contrast Ratio in Abhängigkeit der Pulse Width des flüssigkristallinen Mediums aus Vergleichsbeispiel 1 bei verschiedenen Ansteuerschemata A-E.

Fig. 5 zeigt das Contrast Ratio in Abhängigkeit der Pulse Width des flüssigkristallinen Mediums aus Vergleichsbeispiel 2 bei verschiedenen Ansteuerschemata A-C.

Das herabgesetzte Contrast Ratio der beiden Vergleichsbeispiele (in Fig. 4 und Fig. 5) ist deutlich zu erkennen. Daneben weisen diese Flüssigkristallanzeigen einen deutlich verringerten Pulsewidth-Bereich bei den Ansteuerschemata B-E auf.

In den folgenden flüssigkristallinen Mischungen werden folgende Verbindungen verwendet:

PYP-9.09

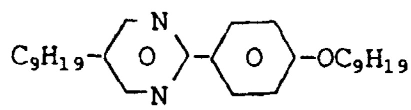

PYP-9.08

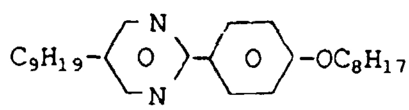

PYP-9.07

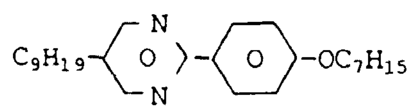

PYP-9.07 FF

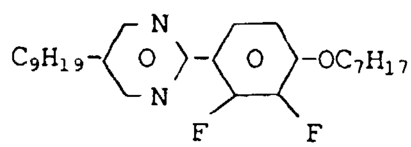

PYP-9.08 FF

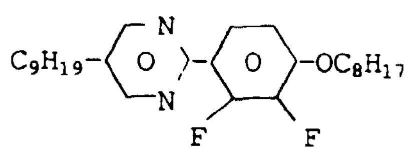

PYP-9.09 FF

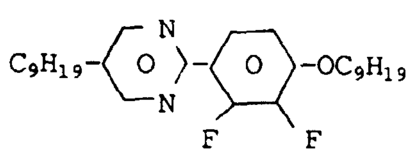

PYP-11.05 C*/FF 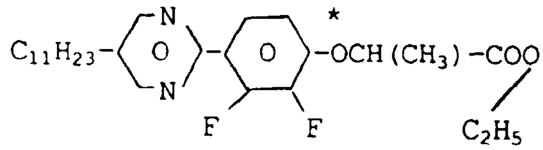

PYP-7.08 F*/FF 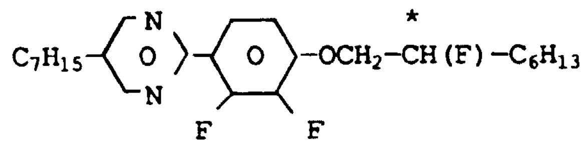

PYRP-7.09 F* 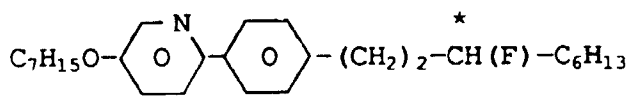

NCB-7.08 F* 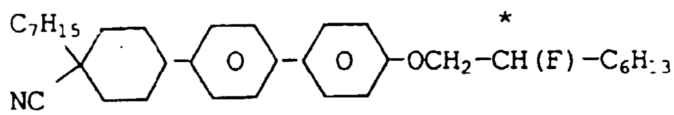

Beispiele

Beispiel 1 für flüssigkristalline Medien

Man stellt ein flüssigkristallines Medium her bestehend aus

| Gew.% | |
|---|---|
| 31,66 | PYP-9.09 |
| 31,66 | PYP-9.08 |
| 31,66 | PYP-9.07 und |
| 5,00 | NCB-7.08 F* |

Phasenfolge: $S_C$* 65 SA 73,Ch 74 1
$\Delta\varepsilon$ = -0,07, P = 5,5 nC. $cm^{-2}$

Ferroelektrische Flüssigkristallanzeigen mit diesem Medium weisen eine hohe Multiplexierbarkeit auf (vgl. Fig. 2).

Beispiel 2 für flüssigkristalline Medien

Man stellt ein flüssigkristallines Medium her bestehend aus

| Gew.% | |
|---|---|
| 23,75 | PYP-9.09 |
| 23,75 | PYP-9.08 |
| 23,75 | PYP-9.07 |
| 7,916 | PYP-9.09 FF |
| 7,916 | PYP-9.08 FF |
| 7,916 | PYP-9.07 FF |
| 5,00 | NCB-7.08 F* |

Phasenfolge: $S_C$* 65 $S_A$ 68 Ch 70 I
$\Delta\varepsilon$ = -0,9, P = 7,0 nC . $cm^{-2}$

Ferroelektrische Flüssigkristallanzeigen mit diesem Medium weisen eine hohe Multiplexierbarkeit auf (vgl. Fig. 3).

Vergleichsbeispiel 1 für flüssigkristalline Medien

Man stellt ein flüssigkristallines Medium her bestehend aus

| Gew.% | |
|---|---|
| 23,75 | PYP-9.09 |
| 23,75 | PYP-9.08 |
| 23,75 | PYP-9.07 |
| 7,916 | PYP-9.09 FF |
| 7,916 | PYP-9.08 FF |
| 7,916 | PYP-9.07 FF |
| 5,00 | NCB-7.08 F* |

Phasenfolge: $S_C$* 63 $S_A$ 64 Ch 65 I
$\Delta\varepsilon$ = -1,8, P = 8,0 nC . $cm^{-2}$

Flüssigkristallanzeigen mit diesem Medium weisen eine geringere Multiplexierbarkeit auf (vgl. Fig. 4).

Vergleichsbeispiel 2 für flüssigkristalline Medien

Man stellt ein flüssigkristallines Medium her bestehend aus

| Gew.% | |
|---|---|
| 15,8 | PYP-9.09 |
| 15,8 | PYP-9.08 |
| 15,8 | PYP-9.07 |
| 15,8 | PYP-9.09 FF |
| 15,8 | PYP-9.08 FF |
| 15,8 | PYP-9.07 FF |
| 5,00 | NCB-7.08 F* |

Phasenfolge: $S_C$* 68 $S_A$ 71 Ch 74 I
$\Delta\varepsilon$ = -1,25, P = 20,0 nC $cm^{-2}$

Flüssigkristallanzeigen mit diesem Medium weisen eine geringere Multiplexierbarkeit auf (vgl. Fig. 5).

**Patentansprüche**

1. Verfahren zur Verbesserung der Multiplexierbarkeit ferroelektrischer Flüssigkristallanzeigen, welche zwischen zwei planparallelen Platten, versehen mit einer Elektrodenmatrix aus Abtast- und senkrecht dazu angeordneten Datenelektroden ein ferroelektrisches Flüssigkristallmedium aufweisen, wobei dieses Medium eine chirale Komponente, bestehend aus einem oder mehreren Dotierstoffen, und eine achirale Basiskomponente, bestehend aus einem oder mehreren achiralen Verbindungen, enthält, dadurch gekennzeichnet, daß man ein Medium verwendet, welches eine dielektrische Anisotropie von -0,01 bis -1,2 und eine Spontanpolarisation von kleiner als 8 nC/$cm^2$ aufweist, wobei sich die Angabe der dielektrischen Anisotropie und der Spontanpolarisation auf Raumtemperatur bezieht, mit der Maßgabe, daß Medien mit einer Spontanpolarisation von 3 nC/$cm^2$ und einer dielektrischen Anisotropie von -1 ausgenommen sind.

2. Verfahren nach Anspruch 1, dadurch gekennzeichnet, daß die achirale Basiskomponente mindestens eine Verbindung mit dem Strukturelement 2-Fluor-1,4-phenylen, Thia-3,4-diazol-2,5-diyl, 2,3-Difluor-1,4-phenylen oder 1-Cyan-1,4-cyclohexylen enthält.

**3.** Verfahren nach Anspruch 1 oder 2, dadurch gekennzeichnet, daß die achirale Basiskomponente im wesentlichen aus Verbindungen der folgenden Komponenten I und II besteht:

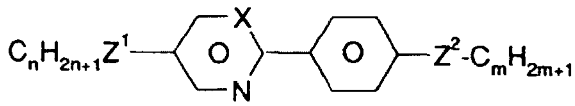

I

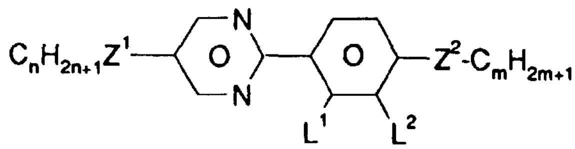

II

worin

| | |
|---|---|
| n und m | jeweils unabhängig voneinander 5 bis 12, |
| X | N oder CH, |
| $L^1$ und $L^2$ | H oder F, wobei mindestens ein Ligand $L^1$ bzw. $L^2$ von H verschieden ist, und |
| $Z^1$ und $Z^2$ | -O- oder eine Einfachbindung |

bedeutet.

**4.** Verfahren nach Anspruch 3, dadurch gekennzeichnet, daß die Komponente I aus Verbindungen einer oder mehreren der Formeln Ia, Ib, Ic und Id besteht:

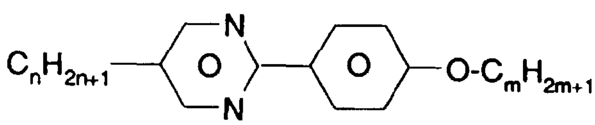

Ia

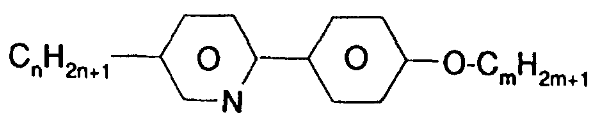

Ib

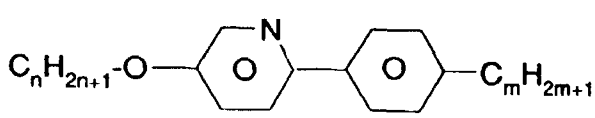

Ic

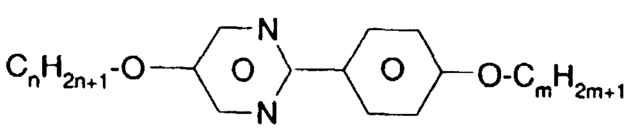

Id

**5.** Verfahren nach Anspruch 3 oder 4, dadurch gekennzeichnet, daß die Komponente II aus Verbindungen einer oder mehreren der Formel IIa bis IIi besteht:

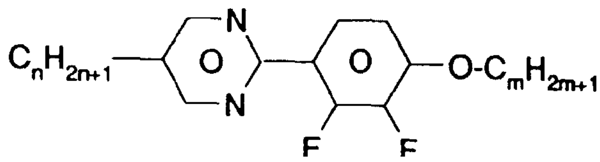

IIa

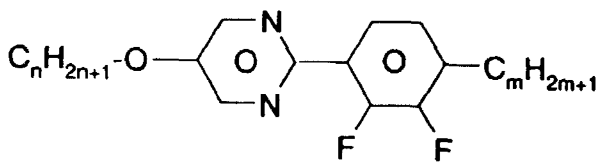

IIb

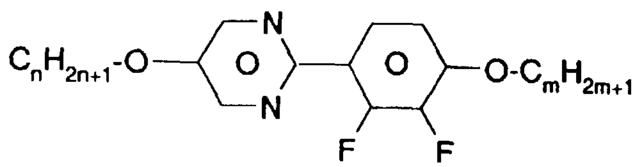

IIc

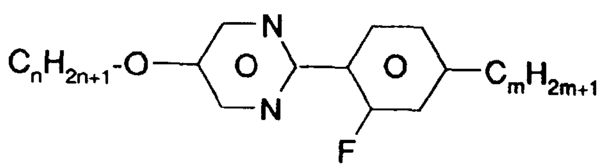

IId

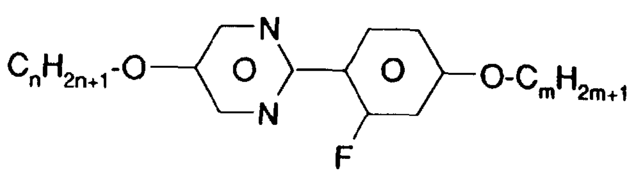

IIe

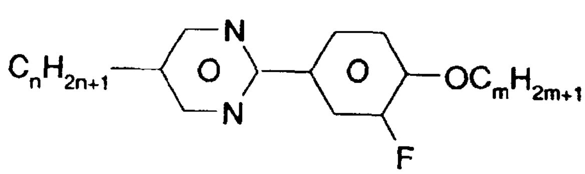

IIf

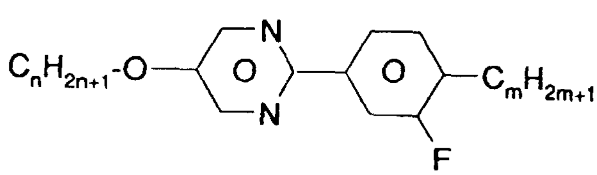

IIg

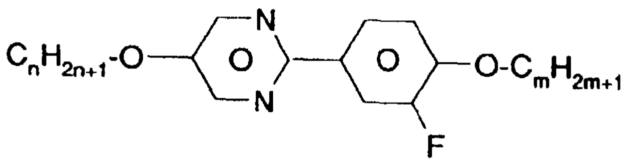

IIh

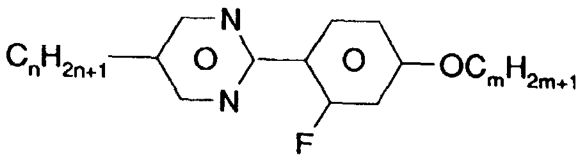

IIi

**6.** Verfahren nach mindestens einem der Ansprüche 3 bis 5, dadurch gekennzeichnet, daß die achirale Basiskomponente die Komponenten I bis II in folgenden Gewichtsanteilen enthält:

| | |
|---|---|
| I | ≧ 35 % |
| II | 8-50 % |

**7.** Verfahren nach mindestens einem der Ansprüche 3 bis 6, dadurch gekennzeichnet, daß der Gewichtsanteil der chiralen Komponente 1 bis 25 % beträgt.

**8.** Verfahren nach Anspruch 7, dadurch gekennzeichnet, daß die chirale Komponente aus einer oder mehreren Verbindungen der Formel III besteht:

$$C_nH_{2n+1}\text{-Q-A-B-}Q^1\text{-C*-}R^oY\text{-}Q^2\text{-}C_mH_{2m+1} \qquad \text{III}$$

worin n und m jeweils unabhängig voneinander 2 bis 12, Q -O-oder eine Einfachbindung, -A-B-

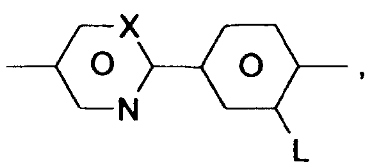 , 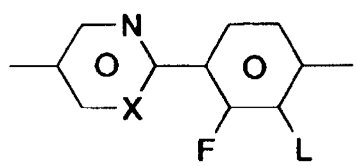 ,

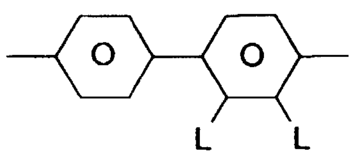 , 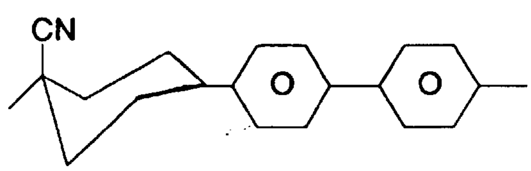

oder ein Spiegelbild dieser Gruppen, wobei L jeweils unabhängig voneinander H oder F bedeutet,

X CH oder N,

$Q^1$ und $Q^2$ jeweils unabhängig voneinander -COO-, -O- oder Alkylen mit 2 bis 4 C-Atomen, worin auch eine $CH_2$-Gruppe durch -O-, -S-,-CO-, -O-CO-, -CO-O-, -S-CO-, -CO-S-, -CH=CH-COO-, -CH=CH-, -CHHalogen und/oder -CHCN- ersetzt sein kann, oder eine Einfachbindung,

Y Halogen, CN, $CH_3$, $CH_2CN$ oder $OCH_3$,

R° H oder eine von Y und -$Q^2$-$C_mH_{2m+1}$ verschiedene Alkylgruppe mit 1 bis 10 C-Atomen, vorzugsweise H, und

C* ein mit vier verschiedenen Substituenten verknüpftes Kohlenstoffatom bedeutet.

**9.** Verfahren nach Anspruch 8, dadurch gekennzeichnet, daß

$Q^1$ -O-, $-CH_2CH_2-$ oder $-OCH_2-$,
Y F oder $CH_3$,
R H,
$Q^2$ -COO- oder eine Einfachbindung und
m 2 bis 8 bedeutet.

**10.** Ferroelektrische Flüssigkristallanzeige mit verbesserter Multiplexierbarkeit, welche zwischen zwei planparallelen Platten, versehen mit einer Elektrodenmatrix aus Abtast- und senkrecht dazu angeordneten Datenelektroden ein ferroelektrisches Flüssigkrstallmedium aufweist, wobei dieses Medium eine chirale Komponente, bestehend aus einem oder mehreren chiralen Dotierstoffen und eine achirale Basiskomponente, bestehend aus einer oder mehreren achiralen Verbindungen, enthält, und eine dielektrische Anisotropie von -0,01 bis -1,2 und eine Spontanpolarisation von kleiner als 8 $nC/cm^2$ aufweist, wobei sich die Angabe der dielektrischen Anisotropie und der Spontanpolarisation auf Raumtemperatur bezieht dadurch gekennzeichnet, daß die achirale Basiskomponente mindestens eine Verbindung der Formel A

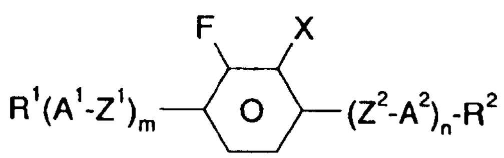

A

worin

| | |
|---|---|
| $R^1$ und $R^2$ | jeweils unabhängig voneinander unsubstituiertes, einfach durch Cyan oder mindestens einfach durch Fluor oder Chlor substituiertes Alkyl mit 1 bis 15 C-Atomen oder Alkenyl mit 3 bis 15 C-Atomen, wobei in diesen Resten jeweils auch eine $CH_2$-Gruppe durch -O-, S-, -CO-, -O-CO-, - CO-O- oder -O-CO-O- ersetzt sein kann, einer der Reste $R^1$ und $R^2$ auch einen Chiralität induzierten organischen Rest Q* mit einem asymmetrischem Kohlenstoffatom, |
| $A^1$ und $A^2$ | jeweils unabhängig voneinander unsubstituiertes oder durch ein oder zwei F- und/oder Cl-Atome und/oder $CH_3$-Gruppen und/oder CN-Gruppen substituiertes 1,4-Phenylen, worin auch eine oder zwei CH-Gruppen durch N ersetzt sein können, 1,4-Cyclohexylen, worin worin auch eine oder zwei nicht benachbarte $CH_2$-Gruppen durch O-Atome und/oder S-Atome ersetzt sein können, Piperidin-1,4-diyl, 1,4-Bicyclo(2,2,2)octylen, 1,3,4-Thiadiazol-2,5-diyl, Naphthalin-2,6-diyl oder 1,2,3,4-Tetrahydronaphthalin-2,6-diyl, $Z^1$ und $Z^2$ jeweils unabhängig voneinander -CO-O-, -O-CO-, $-CH_2CH_2-$, $-OCH_2-$, $-CH_2O-$, -C≡C-oder eine Einfachbindung, |
| X | H oder F, |
| m und n | jeweils 0, 1 oder 2, und |
| (m + n) | 1 oder 2 bedeutet, |

enthält.

**11.** Flüssigkristallanzeige nach Anspruch 10, dadurch gekennzeichnet, daß die achirale Basiskomponente im wesentlichen aus Verbindungen der folgenden Komponenten I und II besteht:

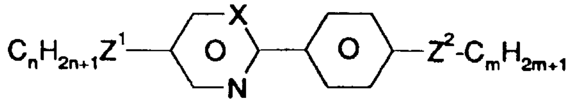

I

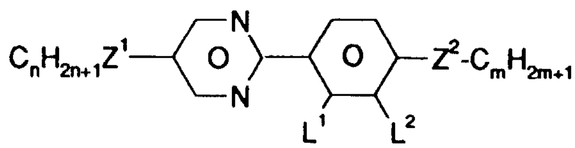

II

worin

| | |
|---|---|
| n und m | jeweils unabhängig voneinander 5 bis 12, |
| X | N oder CH, |
| $L^1$ und $L^2$ | H oder F, wobei mindestens ein Ligand $L^1$ bzw. $L^2$ von H verschieden ist, und |
| $Z^1$ und $Z^2$ | -O- oder eine Einfachbindung |

bedeutet.

**Claims**

1. Method of improving the multiplexing capability of ferroelectric liquid-crystal displays which contain a ferroelectric liquid-crystal medium between two plane-parallel plates provided with an electrode matrix of sampling electrodes and data electrodes arranged perpendicular thereto, this medium containing a chiral component comprising one or more chiral dopes, and an achiral base component comprising one or more achiral compounds, characterised in that a medium is used which has a dielectric anisotropy of from -0,1 to -1,2 and a spontaneous polarisation of less than 8 $nC/cm^2$, where the dielectric anisotropy and spontaneous polarisation data are based on room temperature, provided that media with a spontaneous polarisation of 3 $nC/cm^2$ and a dielectric anisotropy of -1 are excluded.

2. Method according to Claim 1, characterised in that the achiral base component contains at least one compound containing the structural element 2-fluoro-1,4-phenylene, thia-3,4-diazole-2,5-diyl, 2,3-difluoro-1,4-phenylene or 1-cyano-1,4,cyclohexylene.

3. Method according to Claim 1 or 2, characterised in that the achiral base component essentially comprises compounds of components I and II below:

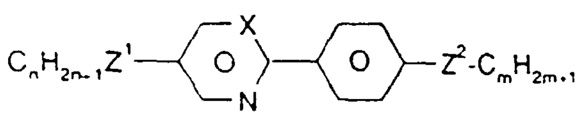

I

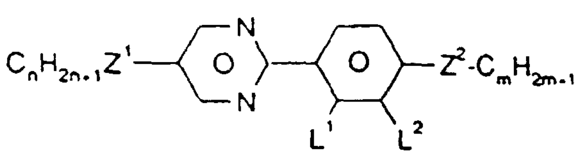

II

in which

| | |
|---|---|
| n and m | are each, independently of one another, from 5 to 12, |
| X | is N or CH, |
| $L^1$ and $L^2$ | are H or F, at least one ligand $L^1$ or $L^2$ being different from H, and |
| $Z^1$ and $Z^2$ | are -O- or a single bond. |

4. Method according to Claim 3, characterised in that component I comprises compounds of one or more of the formulae Ia, Ib, Ic and Id:

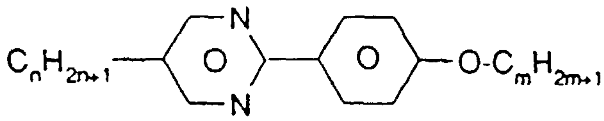

Ia

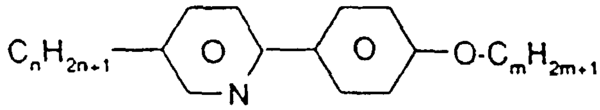

Ib

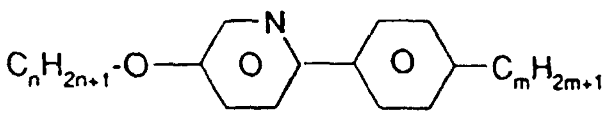

Ic

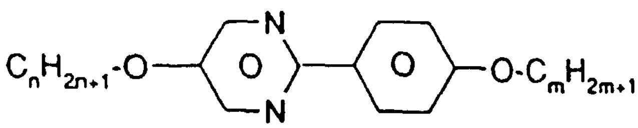

Id

**5.** Method according to Claim 3 or 4, characterised in that component II comprises compounds of one or more of the formulae IIa to IIi:

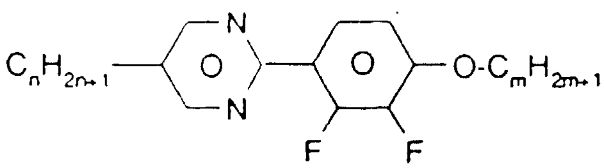

IIa

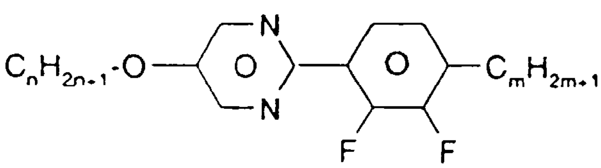

IIb

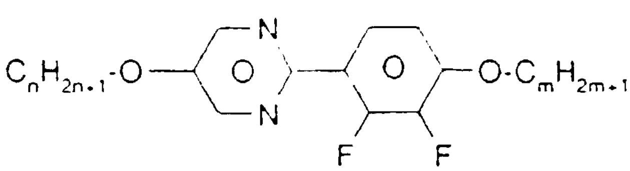

IIc

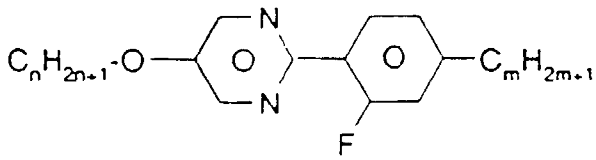

IId

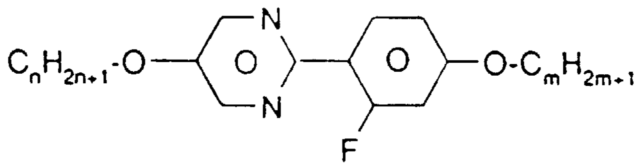

IIe

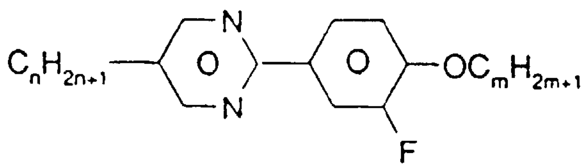

IIf

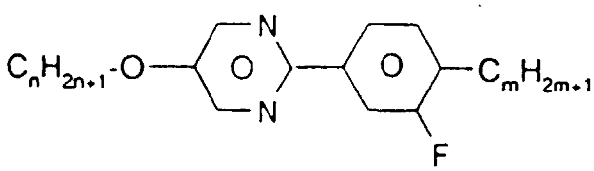

IIg

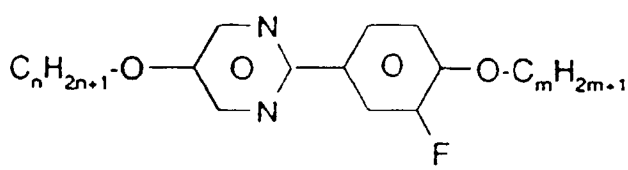

IIh

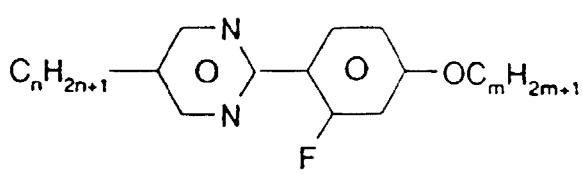

IIi

**6.** Method according to at least one of Claims 3 to 5, characterised in that the achiral base component contains components I and II in the following proportions by weight:

| | |
|---|---|
| I | ≧ 35% |
| II | 8-50% |

**7.** Method according to at least one of Claims 3 to 6, characterised in that the proportion by weight of the chiral component is from 1 to 25%.

**8.** Method according to Claim 7, characterised in that the chiral component comprises one or more compounds of the formula III:

$$C_nH_{2n+1}\text{-Q-A-B-}Q^1\text{-C*-}R^oY\text{-}Q^2\text{-}C_mH_{2m+1} \qquad \text{III}$$

in which n and m are each, independently of one another, from 2 to 12, Q is -O- or a single bond, -A-B-is

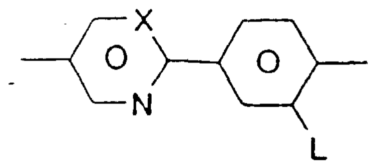,
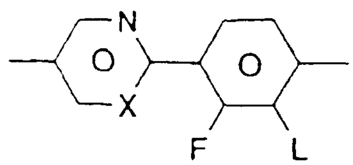,
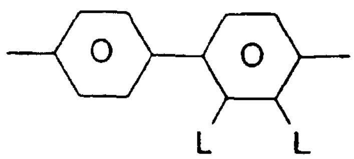,
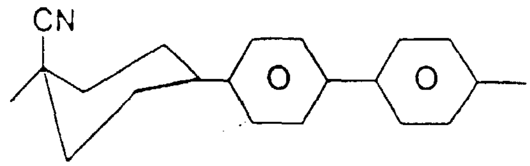

or a mirror image of these groups, where each

L is, independently of one another, H or F,
X is CH or N,
$Q^1$ and $Q^2$ are each, independently of one another, -COO-, -O- or alkylene having 2 to 4 carbon atoms in which, in addition, one $CH_2$ group may be replaced by -O-, -S-, -CO-, -O-CO-, -CO-O-, -S-CO-, -CO-S-, -CH=CH-COO-, -CH=CH-, -CHHalogen- and/or -CHCN-, or are each a single bond,
Y is halogen, CN, $CH_3$, $CH_2CN$ or $OCH_3$,
$R^o$ is H or an alkyl group having 1 to 10 carbon atoms which is different from Y and $Q^2$-$C_mH_{2m+1}$, preferably H, and
C* is a carbon atom linked to four different substituents.

**9.** Method according to Claim 8, characterised in that

$Q^1$ is -O-, $-CH_2CH_2-$ or $-OCH_2-$,
Y is F or $CH_3$,
R is H,
$Q^2$ is -COO- or a single bond and
m is from 2 to 8.

**10.** Ferroelectric liquid-crystal display having improved multiplexing capability, which contains a ferroelectric liquid-crystal medium between two plane-parallel plates provided with an electrode matrix of sampling electrodes and data electrodes arranged perpendicular thereto, this medium containing a chiral component comprising one or more chiral dopes, and an achiral base component comprising one or more achiral compounds, and has a dielectric anisotropy of from -0.01 to -1.2 and a spontaneous polarisation of less than 8 nC/cm$^2$, where the dielectric anisotropy and spontaneous polarisation data are based on room temperature, characterised in that the achiral base component contains at least one compound of the formula A

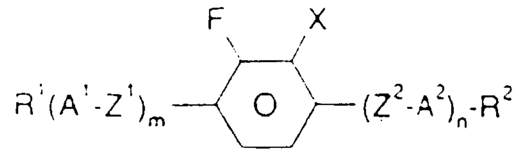

A

in which

| | |
|---|---|
| $R^1$ and $R^2$ | are each, independently of one another, alkyl having 1 to 15 carbon atoms or alkenyl having 3 to 15 carbon atoms, each of which is unsubstituted, monosubstituted by cyano or at least monosubstituted by fluorine or chlorine, it also being possible in each case for one $CH_2$ group in these radicals to be replaced by -O-, -S-. -CO-, -O-CO-, -CO-O- or -O-CO-O-, and one of the radicals $R^1$ and $R^2$ is alternatively a chirality-induced organic radical Q* containing an asymmetric carbon atom, |
| $A^1$ and $A^2$ | are each, independently of one another, 1,4-phenylene which is unsubstituted or substituted by one or two F and/or Cl atoms and/or $CH_3$ groups and/or CN groups and in which, in addition, one or two CH groups may be replaced by N, or are each 1,4-cyclohexylene in which, in which [sic] in addition, one or two non-adjacent $CH_2$ groups may be replaced by O atoms and/or S atoms, or piperidine-1,4-diyl, 1,4-bicycle(2,2,2)-octylene, 1,3,4-thiadiazole-2,5-diyl, naphthalene-2,6-diyl or 1,2,3,4-tetrahydronaphthalene-2,6-diyl, |
| $Z^1$ and $Z^2$ | are each, independently of one another, -CO-O-, -O-CO-, $-CH_2CH_2-$, $-OCH_2-$, $-CH_2O-$, -C≡C- or a single bond, |
| X | is H or F, |
| m and n | are each 0, 1 or 2, and |
| (m + n) | is 1 or 2. |

**11.** Liquid-crystal display according to Claim 10, characterised in that the achiral base component essentially comprises compounds of components I and II below:

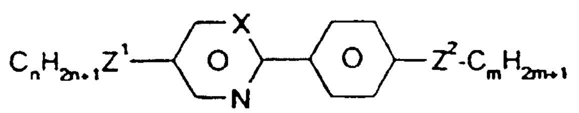

I

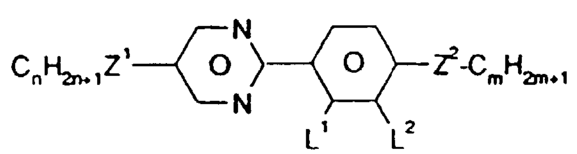

II

in which

| | |
|---|---|
| n and m | are each, independently of one another, from 5 to 12, |
| X | is N or CH, |
| $L^1$ and $L^2$ | are H or F, at least one ligand $L^1$ or $L^2$ being different from H, and |
| $Z^1$ and $Z^2$ | are -O- or a single bond. |

**Revendications**

**1.** Procédé pour améliorer l'aptitude au multiplexage d'affichages à cristaux liquides ferro-électriques contenant un milieu à cristaux liquides ferro-électriques entre deux plaques planes parallèles pourvues d'une matrice d'électrodes consistant en électrodes de balayage et, en disposition perpendiculaire, électrodes de données, ledit milieu contenant un composant chiral consistant en une ou plusieurs substances dopantes chirales et un composant de base achiral consistant en un ou plusieurs composés achiraux, caractérisé en ce que l'on utilise un milieu présentant une anisotropie diélectrique de -0,1 à -1,2 et une polarisation spontanée inférieure à 8 $nC/cm^2$, ces deux indications se rapportant à la température ambiante, en raison de, que les liquides avec une polarisation spontanée de 3 $nC/cm^2$ et une polarisation spontanée de -1 sont exclusé.

**2.** Procédé selon revendication 1, caractérisé en ce que le composant de base achiral contient au moins un composé contenant l'élément de structure 2-fluoro-1,4-phénylène, thia-3,4-diazole-2,5-diyle, 2,3-difluoro-1,4-phénylène ou 1-cyano-1,4-cyclohexylène.

**3.** Procédé selon revendication 1 ou 2, caractérisé en ce que le composant de base achiral consiste essentiellement en combinaisons des composants I et II ci-après :

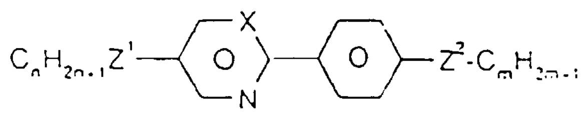

I

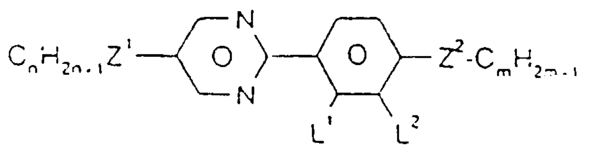

II

dans lesquels

n et m sont des nombres allant chacun, indépendamment l'un de l'autre, de 5 à 12,
X représente N ou CH,
$L^1$ et $L^2$ représentent H ou F, l'un au moins des ligands $L^1$ et $L^2$ étant autre que H, et
$Z^1$ et $Z^2$ représentent -O- ou une liaison simple.

**4.** Procédé selon revendication 3, caractérisé en ce que le composé I consiste en composés répondant à une ou plusieurs des formules Ia, Ib, Ic et Id :

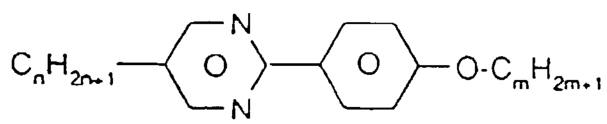

Ia

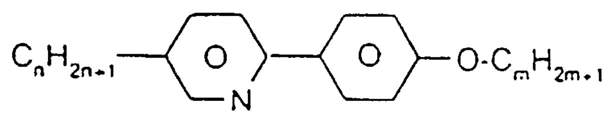

Ib

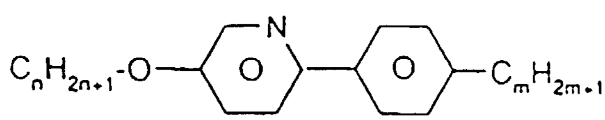

Ic

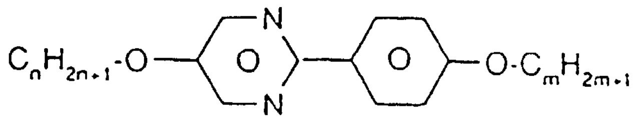

Id

**5.** Procédé selon revendication 3 ou 4, caractérisé en ce que le composant II consiste en composés répondant à une ou plusieurs des formules IIa à IIi:

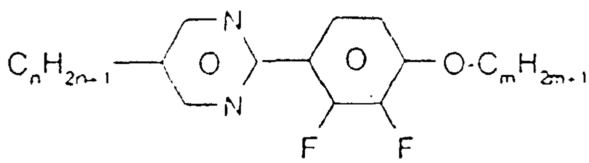

IIa

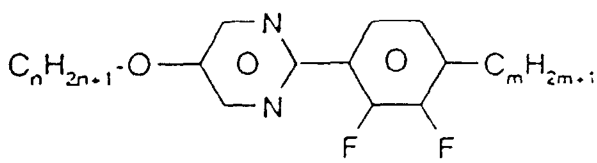

IIb

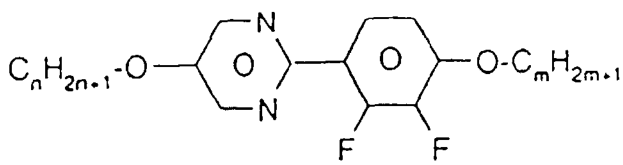

IIc

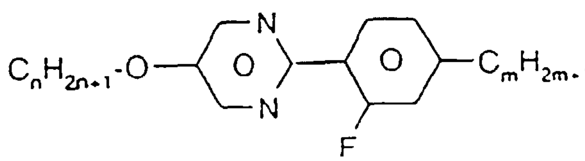

IId

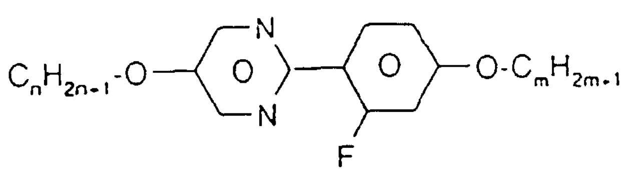

IIe

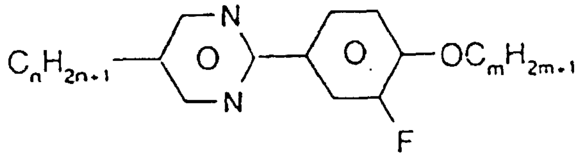

IIf

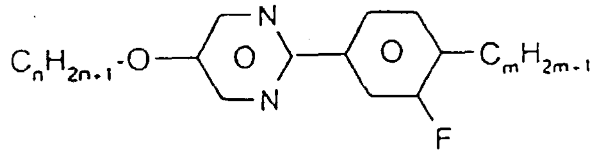

IIg

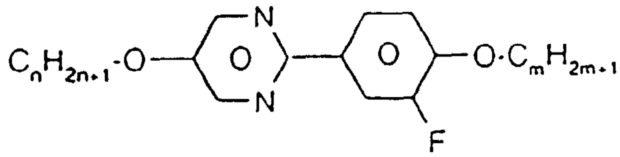

IIh

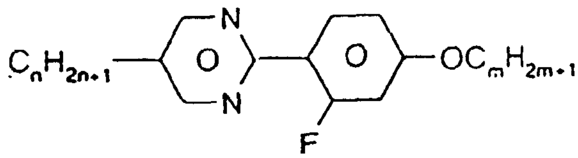

IIi

6. Procédé selon au moins une des revendications 3 à 5, caractérisé en ce que !e composant de base achiral contient les composants I et II aux proportions suivantes, en poids :

| | |
|---|---|
| I | ≧ 35% |
| II | 8-50% |

7. Procédé selon au moins une des revendications 3 à 6, caractérisé en ce que le composant chiral est présent en proportion en poids de 1 à 25%.

8. Procédé selon revendication 7, caractérisé en ce que le composant chiral consiste en un ou plusieurs composés de formule III :

$$C_nH2_{n+1}\text{-Q-A-B-}Q_1\text{-C*-}R^{o}Y\text{-}Q_2\text{-}C_mH_{2m+1} \qquad III$$

dans laquelle n et m sont des nombres allant chacun, indépendamment l'un de l'autre, de 2 à 12, Q représente -O- ou une liaison simple, -A-B- représente

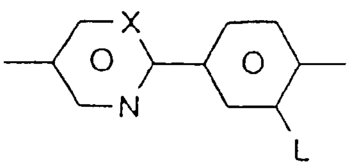
,
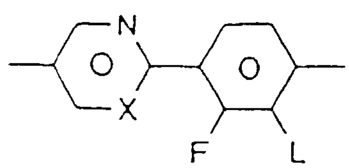
,

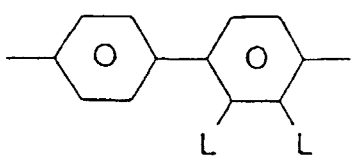
,
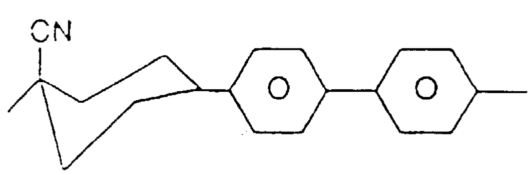

ou une image spéculaire de ces groupes,
les symboles L représentant chacun, indépendamment l'un de l'autre, H ou F,

| | |
|---|---|
| X | représente CH ou N |
| $Q^1$ et $Q^2$ | représentent chacun, indépendamment l'un de l'autre, -COO-, -O- ou un groupe alkylène en C2-C4 dans lequel également un groupe $CH_2$ peut être remplacé par -O-, -S-, -CO-, -O-CO-, -CO-O-, -S-CO-, -CO-S-, -CH =CH-COO-, -CH = CH-, - -CHhalogène et/ou -CHCN-, ou une liaison simple, |
| Y | représente un halogène, CN, $CH_3$, $CH_2CN$ ou $OCH_3$, |
| R° | représente H ou un groupe alkyle en C1-C10 autre que Y et $-Q^2-C_mH_{2m-1}$, de préférence H, et |
| C* | représente un atome de carbone relié à quatre substituants différents. |

**9.** Procédé selon revendication 8, caractérisé en ce que

| | |
|---|---|
| $Q^1$ | représente -O-, $-CH_2CH_2-$ ou $-OCH_2-$, |
| Y | représente F ou $CH_3$, |
| R | représente H, |
| $Q^2$ | représente -COO- ou une liaison simple, et |
| m | est un nombre allant de 2 à 8. |

**10.** Affichage à cristaux liquides ferroélectriques à aptitude améliorée au multiplexage, contenant un milieu à cristaux liquides ferro-électriques entre deux plaques planes parallèles pourvues d'une matrice d'électrodes consistant en électrodes de balayage et, perpendiculairement, électrodes de données, ce milieu contenant un composant chiral qui consiste en une ou plusieurs substances chirales dopantes et un composant de base achiral qui consiste en un ou plusieurs composés achiraux, et ayant une anisotropie diélectrique de -0,01 à -1,2 et une polarisation spontanée inférieure à 8 nC/$cm^2$, ces deux indications se rapportant à la température ambiante, caractérisé en ce que le composant de base achiral contient au moins un composé de formule A

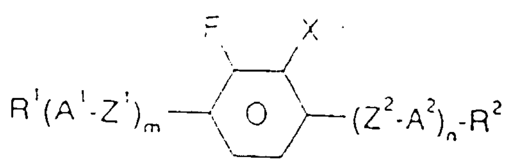

A

dans laquelle

| | |
|---|---|
| $R^1$ et $R^2$ | représentent chacun, indépendamment l'un de l'autre, un groupe alkyle en C1-C15 ou alcényle en C3-C15 non substitué, mono-substitué par un groupe cyano ou au moins mono-substitué par le fluor ou le chlore, un groupe $CH_2$ de ces radicaux pouvant également être remplacé par -O-, -S-, -CO-, -O-CO-, -CO-O- ou -O-CO-O-, l'un des radicaux $R^1$ et $R^2$ pouvant également consister en un radical organique Q* à atome de carbone asymétrique induisant la chiralité, |
| $A^1$ et $A^2$ | représentent chacun, indépendamment l'un de l'autre, un groupe 1,4-phénylène non substitué ou substitué par un ou deux atomes de F et/ou de Cl et/ou groupes $CH_3$ et/ou groupes CN, et dans lequel un ou deux groupes CH peuvent être remplacés par N, un groupe 1,4-cyclohexylène dans lequel également un ou deux groupes $CH_2$ non voisins peuvent être remplacés par des atomes d'oxygène et/ou des atomes de soufre, un groupe pipéridine-1,4-diyle, 1,4-bicyclo(2,2,2)octylène, 1,3,4-thiadiazole-2,5-diyle, naphtalène-2,6-diyle ou 1.2,3,4-tétrahydronaphtalène-2,6-diyle, |
| $Z^1$ et $Z^2$ | représentent chacun, indépendamment l'un de l'autre, -CO-O-, -O-CO-, $-CH_2CH_2-$, $-OCH_2-$, - $-CH_2O-$, -C≡C- ou une liaison simple, |
| X | représente H ou F, |
| m et n | sont égaux chacun à 0,1 ou 2, et |
| (m + n) | est égal à 1 ou 2. |

**11.** Affichage à cristaux liquides selon revendication 10, caractérisé en ce que le composant de base achiral consiste essentiellement en combinaisons des composants I et II ci-après :

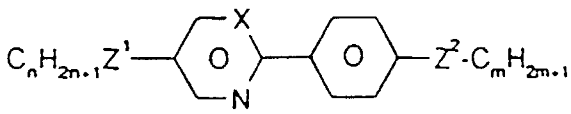

I

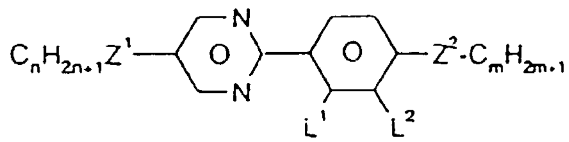

II

dans lesquels

| | |
|---|---|
| n et m | sont égaux chacun, indépendamment l'un de l'autre, à un nombre allant de 5 à 12, |
| X | représente N ou CH, |
| $L^1$ et $L^2$ | représentent H ou F, l'un au moins des ligands $L^1$ et $L^2$ étant autre que H, et |
| $Z^1$ et $Z^2$ | représentent -O- ou une liaison simple. |

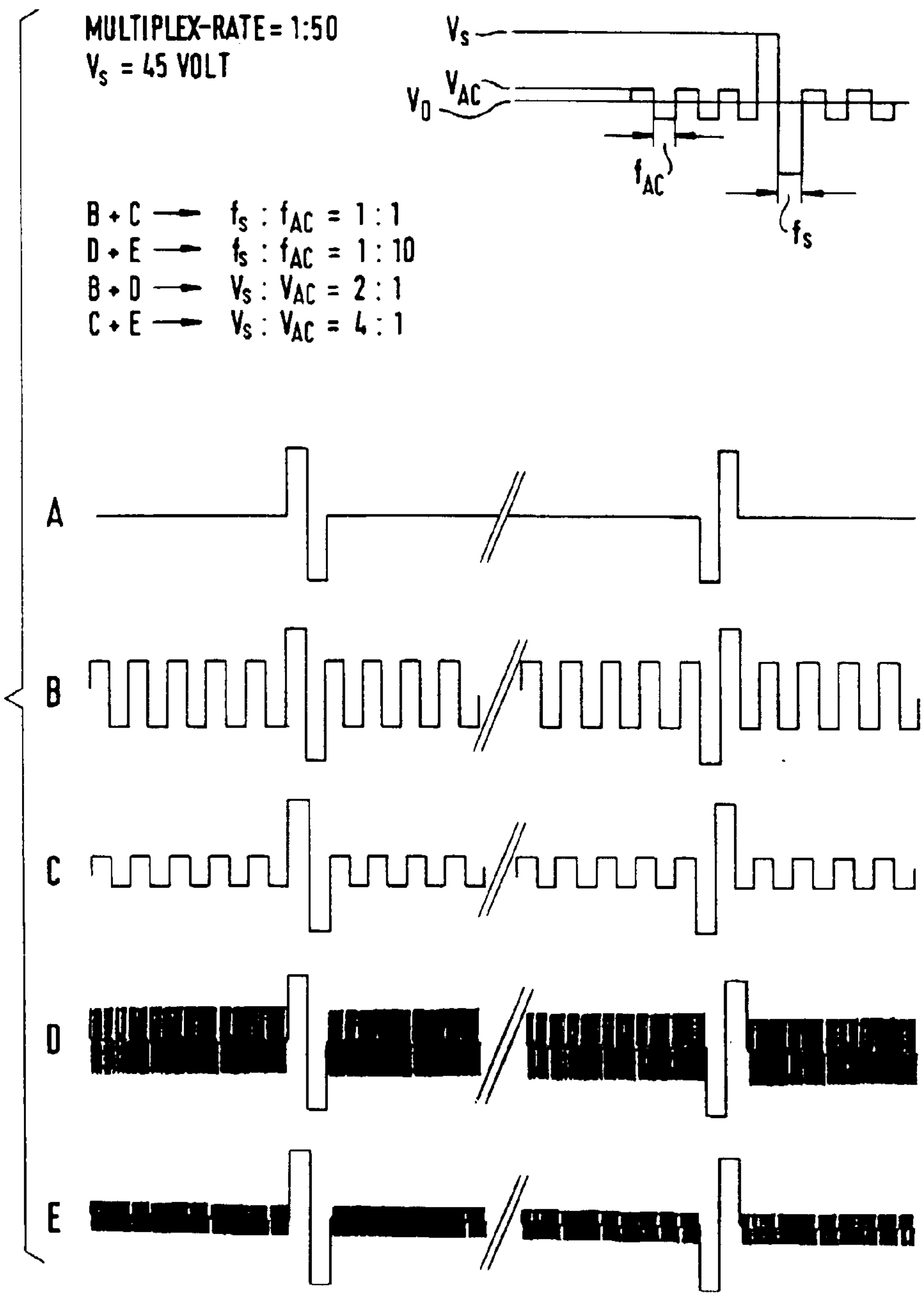
MULTIPLEX-RATE = 1:50
Vs = 45 VOLT
Vs
VAC
V0
fAC
fs
B + C → fs : fAC = 1 : 1
D + E → fs : fAC = 1 : 10
B + D → Vs : VAC = 2 : 1
C + E → Vs : VAC = 4 : 1
A
B
C
D
E

FIG. 1

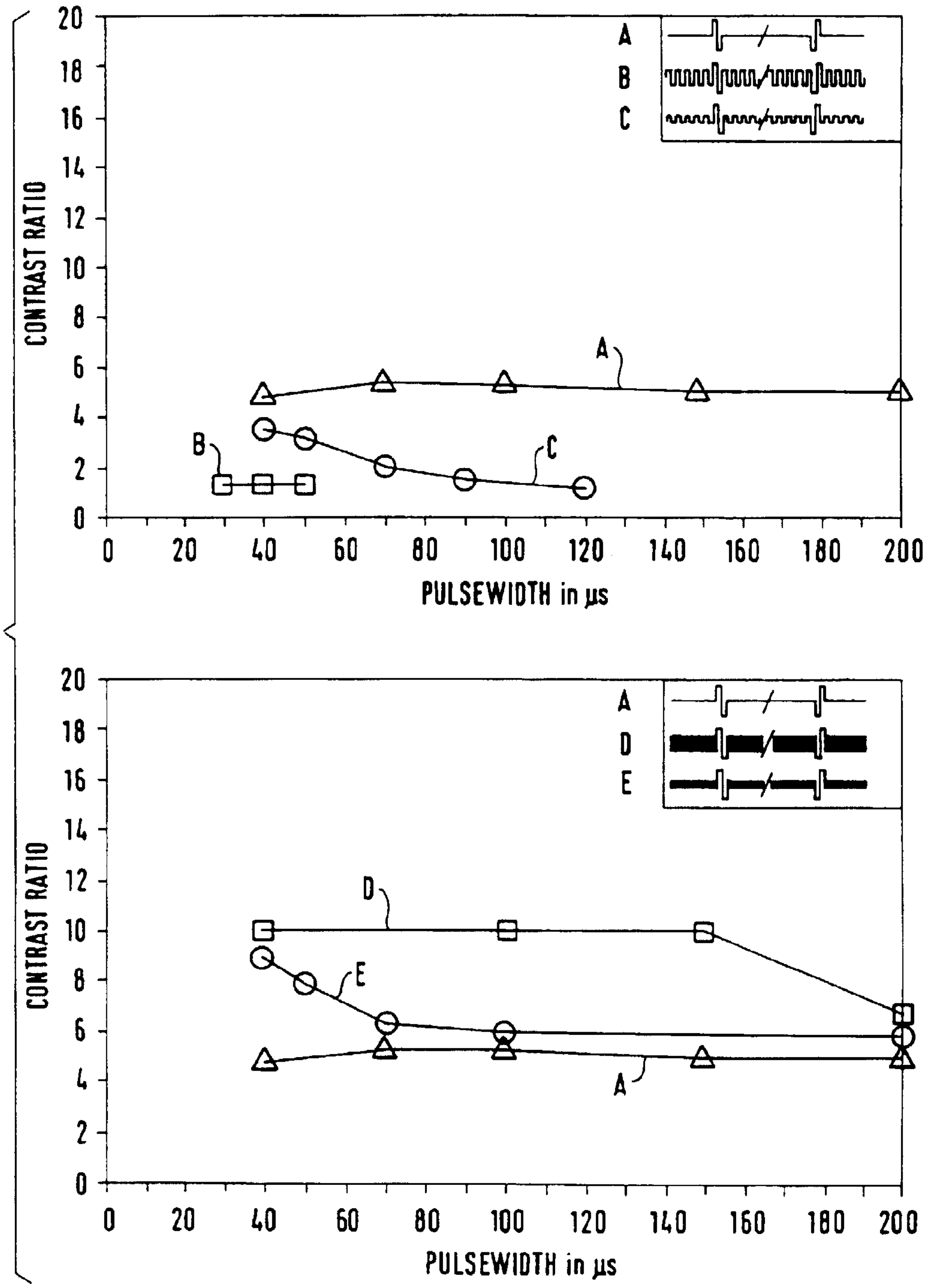
20
18
16
14
12
10
8
6
4
2
0
CONTRAST RATIO
A
B
C
A
B
C
0
20
40
60
80
100
120
140
160
180
200
PULSEWIDTH in µs
20
18
16
14
12
10
8
6
4
2
0
CONTRAST RATIO
A
D
E
D
E
A
0
20
40
60
80
100
120
140
160
180
200
PULSEWIDTH in µs

FIG. 2

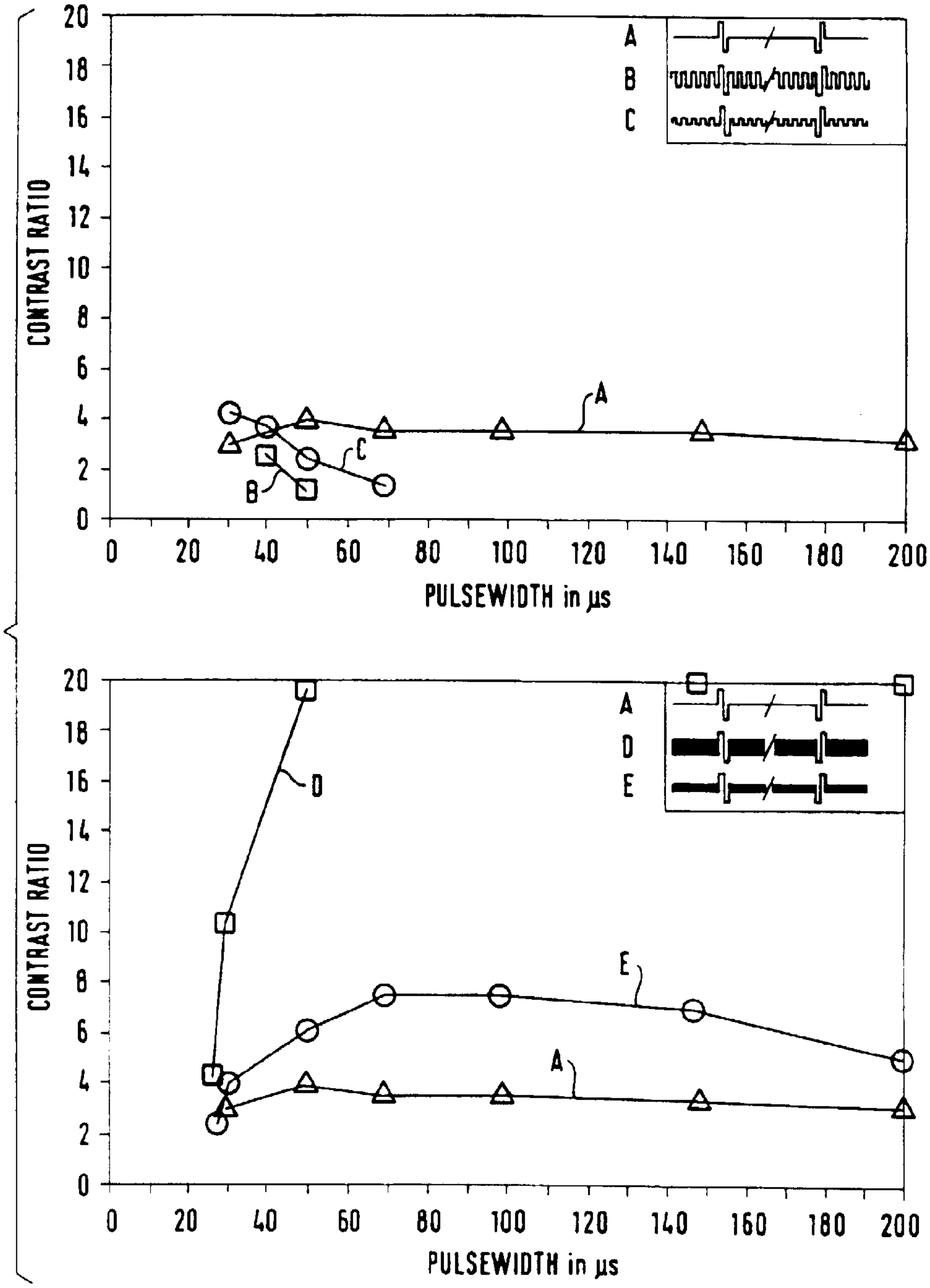
CONTRAST RATIO
PULSEWIDTH in µs
A
B
C
D
E
0
20
40
60
80
100
120
140
160
180
200
2
4
6
8
10
12
14
16
18

FIG.3

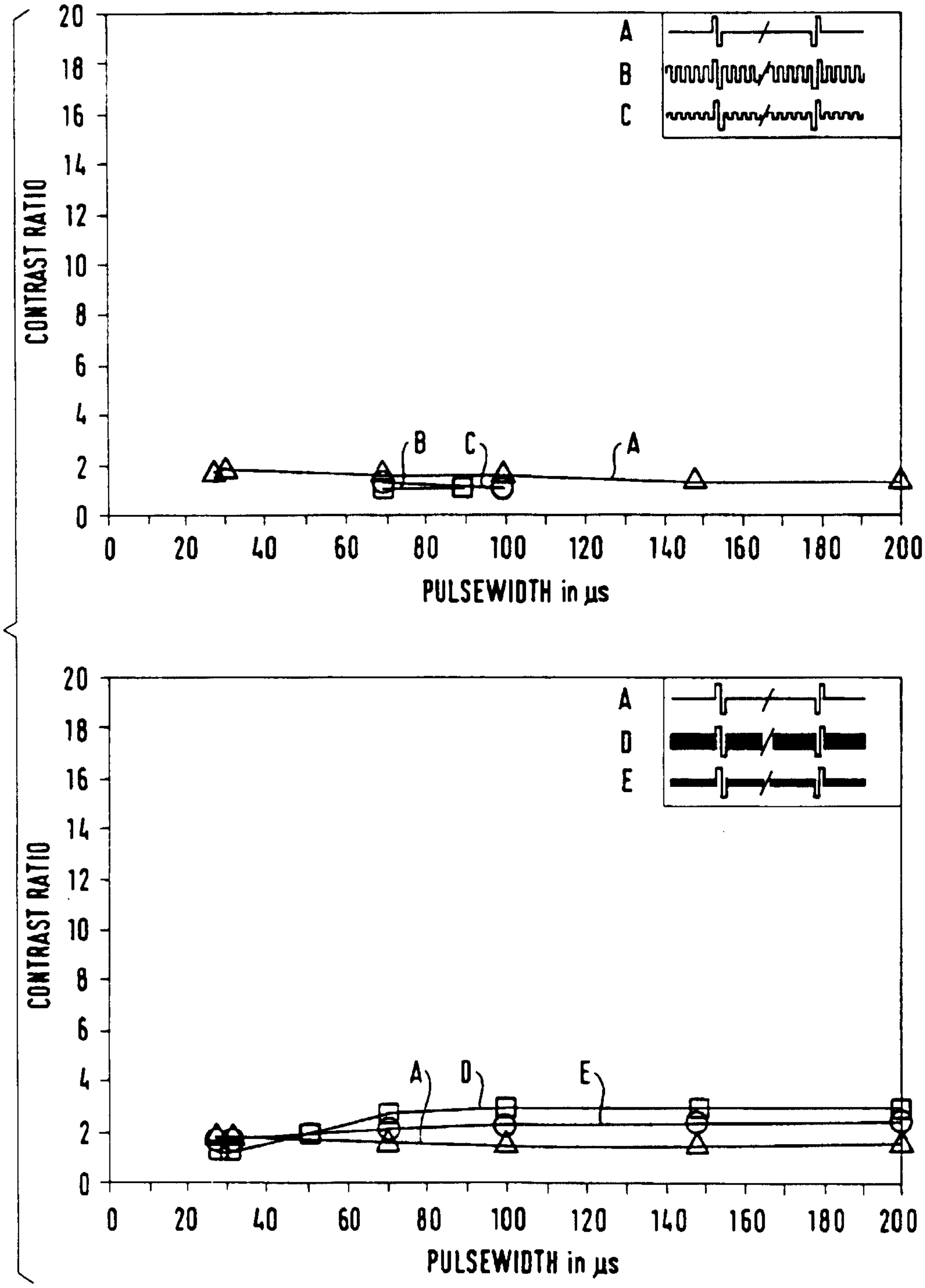


FIG. 4

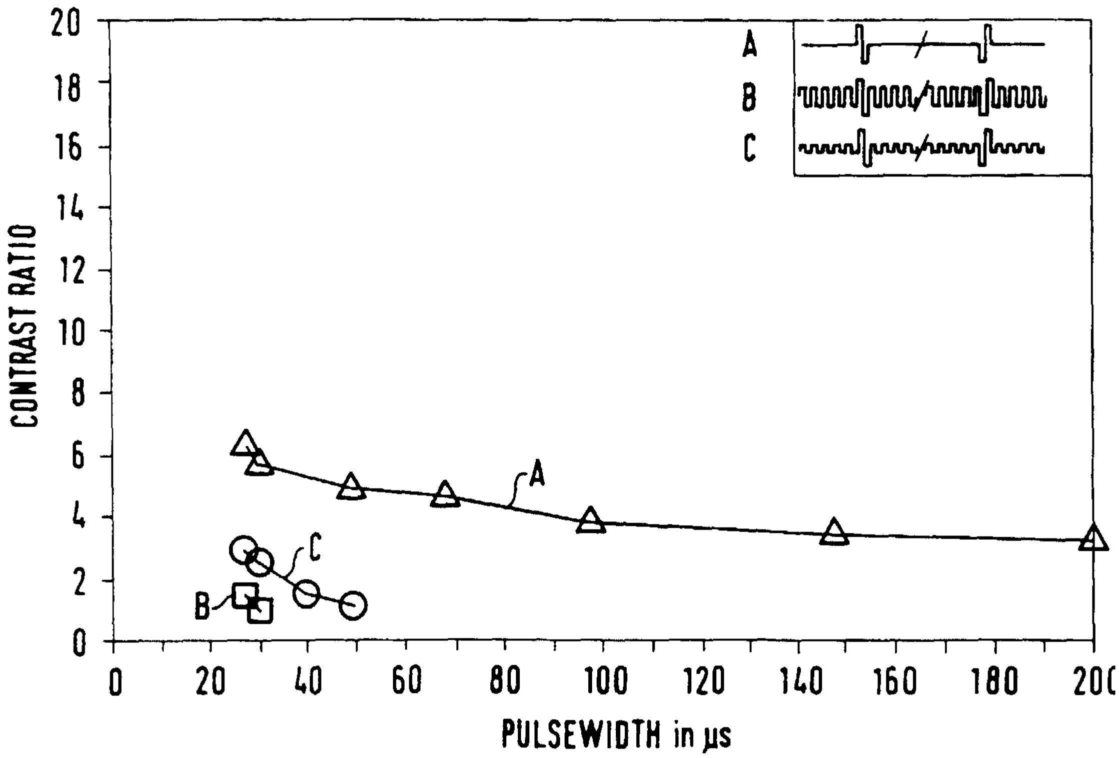
A
B
C
CONTRAST RATIO
20
18
16
14
12
10
8
6
4
2
0
0
20
40
60
80
100
120
140
160
180
200
PULSEWIDTH in µs

FIG. 5